# EUROPÄISCHE PATENTANMELDUNG

(11) **EP 4 336 221 A1**
(43) Veröffentlichungstag der Anmeldung: **13.03.2024**
(21) Anmeldenummer: 23194482.8
(22) Anmeldetag: 31.08.2023
(51) Int. Cl.: G01S 19/20, G01S 19/53

(54) **SYSTEM UND VERFAHREN ZUR ERZEUGUNG GEPRÜFTER POSITIONSDATEN**

(30) Priorität: 06.09.2022 DE 102022122508
(71) Anmelder: SICK AG, 79183 Waldkirch (DE)
(72) Erfinder: Schmitt, Boris, 68490 Chalampé (FR); Rapp, Ralph, 79346 Endingen (DE)

(57) **Zusammenfassung**

Verfahren mit einem System und System (1) mit mindestens einem autonomen Fahrzeug (2, 16), wobei das autonome Fahrzeug (2, 16) mindestens einen Antrieb (3), mindestens eine Bremse (4) und mindestens eine Lenkung (5) aufweist, wobei das Fahrzeug (2, 16) ein Navigationssystem (6) aufweist, wobei das Navigationssystem (6) einen ersten Funkempfänger (7) für ein globales Navigationssatellitensystem und einen zweiten Funkempfänger (8) für ein globales Navigationssatellitensystem aufweist, wobei der erste Funkempfänger (7) und der zweite Funkempfänger (8) in einem vordefinierten Abstand am Fahrzeug (2, 16) angeordnet sind, wobei das Navigationssystem (6) eine Steuer- und Auswerteeinheit (9) aufweist, an welche der erste Funkempfänger (7) und der zweite Funkempfänger (8) angeschlossen sind, wobei die Steuer- und Auswerteeinheit (9) zwei unabhängige Rechnereinheiten (10, 11) aufweist, wobei die Steuer- und Auswerteeinheit (9) ausgebildet ist, die Positionsdaten des ersten Funkempfängers (7) und die Positionsdaten des zweiten Funkempfängers (8) mit beiden Rechnereinheiten (10, 11) auszuwerten und miteinander zu vergleichen und die Steuer- und Auswerteeinheit (9) ausgebildet ist, bei einer gültigen Übereinstimmung der Positionsdaten geprüfte Positionsdaten zu erzeugen.

## Beschreibung

Die vorliegende Erfindung betrifft ein System gemäß dem Oberbegriff von Anspruch 1 und ein Verfahren gemäß dem Oberbegriff von Anspruch 7.

Autonom fahrende Maschinen im Outdoorbereich, die z.B. im Agrarumfeld oder auf Baustellen arbeiten, müssen funktional sicher sein, um gefährliche Kollisionen zu verhindern. Darüber hinaus muss sichergestellt sein, dass die Maschinen die Grenzen des ihnen zugewiesenen Arbeitsbereichs nicht verlassen. Beispielsweise soll ein Agrarroboter, der auf der Agrarfläche arbeitet, nicht unbeaufsichtigt auf öffentliche Wege oder Straßen geraten. Im Baustellenbereich dürfen Maschinen, wie z.B. Straßenwalzen, die Grenzen der Baustelle nicht verlassen und dadurch z.B. nicht in den fließenden Verkehr geraten.

Lokalisierung basiert nach dem Stand der Technik auf Triangulation bzw. der Signallaufzeit zwischen mehreren geostationären Satelliten im All und von Funkempfängern am Boden. Beispielsweise können damit Positionen mit einer Genauigkeit von ca. 2,5 m lokalisiert werden.

Die Lokalisierung wird in der Regel nur über einen Funk-Receiver durchgeführt. Damit kann die Information nicht verifiziert bzw. plausibilisiert werden und ist daher für eine funktionale sichere Positionierung nicht verwendbar.

Die DE 10 2020 208 304 A1 offenbart ein Verfahren, das von einem Rechnersystem für eine Arbeitsmaschine auf einer Arbeitsstelle durchgeführt wird, wobei das Verfahren Folgendes umfasst: automatisches Identifizieren eines Satzes lokaler Geräte, die der Arbeitsstelle entsprechen auf Grundlage von Signalen, die von dem Satz lokaler Geräte erfasst werden, wobei jedes der lokalen Geräte konfiguriert ist, um Korrekturdaten zum Korrigieren von Positionsdaten, die von einem Satellitennavigationssignal abgeleitet werden, zu übertragen; Auswählen einer oder mehrerer lokaler Geräte aus dem Satz lokaler Geräte; Empfangen des Satellitennavigationssignals; Generieren der Positionsdaten, die eine geografische Position aus dem empfangenen Satellitennavigationssignal der Arbeitsmaschine an der Arbeitsstelle angeben; Empfangen der Korrekturdaten von dem einen oder mehreren lokalen Geräten; Generieren korrigierter Positionsdaten durch Anwenden der Korrekturdaten auf die Positionsdaten; und Steuern der Arbeitsmaschine auf Grundlage der korrigierten Positionsdaten.

Eine Aufgabe der Erfindung besteht darin ein System bereitzustellen, was in der Lage ist, eine Maschine im Outdoorbereich funktional sicher zu lokalisieren, und die Information an eine Fahrzeugsteuerung und/oder eine übergeordnete Steuerung derart weiterzugeben, dass die Position der Maschine funktional sicher bestimmt werden kann.

Die Aufgabe wird gemäß Anspruch 1 gelöst durch ein System mit mindestens einem autonomen Fahrzeug, wobei das autonome Fahrzeug mindestens einen Antrieb, mindestens eine Bremse und mindestens eine Lenkung aufweist, wobei das Fahrzeug ein Navigationssystem aufweist, wobei das Navigationssystem einen ersten Funkempfänger und einen zweiten Funkempfänger aufweist, wobei der erste Funkempfänger und der zweite Funkempfänger in einem vordefinierten Abstand am Fahrzeug angeordnet sind, wobei das Navigationssystem eine Steuer- und Auswerteeinheit aufweist, an welche der erste Funkempfänger und der zweite Funkempfänger angeschlossen sind, wobei die Steuer- und Auswerteeinheit zwei unabhängige Rechnereinheiten aufweist, wobei die Steuer- und Auswerteeinheit ausgebildet ist, die Positionsdaten des ersten Funkempfängers und die Positionsdaten des zweiten Funkempfängers mit beiden Rechnereinheiten auszuwerten und miteinander zu vergleichen und die Steuer- und Auswerteeinheit ausgebildet ist, bei einer gültigen Übereinstimmung der Positionsdaten geprüfte Positionsdaten zu erzeugen.

Die Aufgabe wird weiter gemäß Anspruch 7 gelöst mit einem Verfahren mit einem System mit mindestens einem autonomen Fahrzeug, wobei das autonome Fahrzeug mindestens einen Antrieb, mindestens eine Bremse und mindestens eine Lenkung aufweist, wobei das Fahrzeug ein Navigationssystem aufweist, wobei das Navigationssystem einen ersten Funkempfänger und einen zweiten Funkempfänger aufweist, wobei der erste Funkempfänger und der zweite Funkempfänger in einem vordefinierten Abstand am Fahrzeug angeordnet werden, wobei das Navigationssystem eine Steuer- und Auswerteeinheit aufweist, an welche der erste Funkempfänger und der zweite Funkempfänger angeschlossen werden, wobei die Steuer- und Auswerteeinheit zwei unabhängige Rechnereinheiten aufweist, wobei die Steuer- und Auswerteeinheit die Positionsdaten des ersten Funkempfängers und die Positionsdaten des zweiten Funkempfängers mit beiden Rechnereinheiten auswertet und miteinander vergleicht und die Steuer- und Auswerteeinheit bei einer gültigen Übereinstimmung der Positionsdaten geprüfte Positionsdaten erzeugt.

Gemäß der Erfindung kann über eine funktional sichere Lokalisierung die Position des autonomen Fahrzeugs überwacht und über die Steuer- und Auswerteeinheit bzw. eine Maschinensteuerung die Aktorik des autonomen Fahrzeugs, also der Antrieb, die Bremse und/oder die Lenkung so beeinflusst bzw. gesteuert werden, dass ein Verlassen des definierten Arbeitsbereichs verhindert wird.

Funktionale Sicherheit ist in der Norm IEC 61508 bzw. IEC 62061 geregelt. Funktionale Sicherheit bezeichnet den Teil der Sicherheit eines Systems, der von der korrekten Funktion des sicherheitsbezogenen Systems und anderer risikomindernder Maßnahmen abhängt.

Entsprechend fordert die Normenreihe IEC 61508 "Funktionale Sicherheit sicherheitsbezogener elektrischer/elektronischer/programmierbar elektronischer Systeme" die Anwendung diverser Methoden zur Beherrschung von Fehlern:
- Vermeidung systematischer Fehler in der Entwicklung, z. B. Spezifikations- und Implementierungsfehler;
- Überwachung im laufenden Betrieb zur Erkennung von zufälligen Fehlern; und
- sichere Beherrschung von erkannten Fehlern und Übergang in einen vorher als sicher definierten Zustand.

Die IEC 61508 ist eine internationale Normenserie zur Entwicklung von elektrischen, elektronischen und programmierbaren elektronischen (E/E/PE) Systemen, die eine Sicherheitsfunktion ausführen.

Ein Element ist die Bestimmung der Sicherheitsanforderungsstufe ("Safety Integrity Level" - SIL; es gibt SIL 1 bis SIL 4). Die Sicherheitsanforderungsstufe ist ein Begriff aus dem Gebiet der Funktionalen Sicherheit und wird in der internationalen Normung gemäß IEC 61508 auch als Sicherheitsstufe oder Sicherheits-Integritätslevel bezeichnet. Sie dient der Beurteilung elektrischer/elektronischer/programmierbarer elektronischer (E/E/PE)-Systeme in Bezug auf die Zuverlässigkeit von Sicherheitsfunktionen. Aus dem angestrebten Level ergeben sich die sicherheitsgerichteten Konstruktionsprinzipien, die eingehalten werden müssen, damit das Risiko einer Fehlfunktion minimiert werden kann.

Zweikanalige Systeme, bei denen jeder Kanal für sich allein die Sicherheitsfunktion auslösen kann, können mit weniger technischem Aufwand eine höhere SIL erreichen als solche, die nur einen Kanal besitzen. Als Kanal wird dabei der Informationsfluss durch eine Sicherheitskette bezeichnet, angefangen von der Anforderung der Sicherheitsfunktion endend mit dem Aktor bzw. Stellglied, welches den sicheren Zustand des autonomen Fahrzeugs bestimmt.

Die Norm IEC 62061 legt Anforderungen fest und gibt Empfehlungen für den Entwurf, die Integration und die Validierung von sicherheitsbezogenen elektrischen, elektronischen und programmierbaren elektronischen Steuerungssysteme für Maschinen. Die Norm ist auf Steuerungssysteme anwendbar, die entweder einzeln oder in Kombination verwendet werden, um sicherheitsbezogene Steuerungsfunktionen an Maschinen auszuführen.

Gemäß der Erfindung werden zwei Rechnereinheiten bzw. Verarbeitungseinheiten eingesetzt, die Daten (Ergebnisse, Zwischenergebnisse, Testdaten u.a.) gegenseitig austauschen. Durch die zwei Rechnereinheiten wird ein redundantes System gebildet. In jeder Rechnereinheit wird per Software ein Vergleich der Daten durchgeführt; Ungleichheit führt zu einer Fehlermeldung, die beispielsweise zur Abschaltung des Antriebs, zur Einleitung eines Lenkvorganges und/oder zur Einleitung eines Bremsvorgangs genutzt werden kann.

Die zwei Rechnereinheiten können identisch ausgebildet sein. Jedoch können die Rechnereinheiten auch jeweils verschieden ausgebildet sein. Dadurch wird ein diversitäres, redundantes System gebildet. Systematische Fehler, die ggf. in einer Rechnereinheit vorhanden sind, werden dann mit sehr hoher Wahrscheinlichkeit durch die parallele zweite Rechnereinheit aufgedeckt.

Die Rechnereinheiten sind miteinander mittels einer Kommunikationsschnittstelle verbunden. Dadurch können die Ergebnisse der ersten Rechnereinheit an die zweite Rechnereinheit übermittelt werden und umgekehrt von der zweiten Rechnereinheit an die erste Rechnereinheit übermittelt werden. Eine Rechnereinheit überprüft jeweils die Ergebnisse der anderen Rechnereinheit.

Die Rechnereinheiten können beispielsweise durch Mikrocontroller, Mikroprozessoren, digitale Signalprozessoren und Ähnliches gebildet sein.

Das System bildet damit ein Sicherheitssystem, welches mindestens zweikanalig aufgebaut ist. Während einkanalige Systeme in der Regel auf Fehler mit einem Versagen reagieren, so können zwei- oder mehrkanalige Systeme sich gegenseitig prüfen und eventuelle Fehler erkennen.

Die Steuer- und Auswerteeinheit kann somit auch durch eine Sicherheitssteuerung gebildet sein.

Vorzugsweise ist ein Diagnosedeckungsgrad vorgesehen. Die Rechnereinheiten werden zyklisch regelmäßig getestet, so kann ein Versagen oder ein Defekt erkannt werden. Der Diagnosedeckungsgrad (DC: aus dem Englischen Diagnostic Coverage) gibt an, mit welcher Wahrscheinlichkeit die Fehler durch einen Test offenbart werden. Die regelmäßigen Tests des Systems führen dazu, dass festgestellt wird, ob das System noch funktioniert. Dabei hängt der Diagnosedeckungsgrad von der Güte des Tests ab. Beispielsweise führen die Rechnereinheiten jeweils Selbsttests durch, um Fehler aufzudecken. Weiter kann auch vorgesehen sein, dass sich die Rechnereinheiten gegenseitig testen, wodurch Fehler noch wirksamer vermieden werden, wodurch ein hoher Diagnosedeckungsgrad erreicht wird.

Funkempfänger sind Satellitennavigationssystemempfänger, der konfiguriert ist, um Signale von einem Satz von Satellitensendern zu empfangen. Ein Funkempfänger ist ein Empfänger für ein globales Navigationssatellitensystem (GNSS-System), der Signale von einem oder mehreren Funk-Satellitensendern empfängt.

Die Satellitensender sind Teil eines Satellitennavigationssystems und generieren entsprechende Satellitennavigationssignale, die von der Satellitennavigationssignalerfassungslogik erfasst werden. Das Satellitennavigationssystem kann aus einer Vielzahl verschiedener Typen bestehen. In einem Beispiel sind Satellitensender Teil eines globalen Navigationssatellitensystems (GNSS). Beispiele für solche Systeme sind unter anderem GPS, GLONASS, BEIDOU, GALILEO, QZSS, IRNSS und SBAS, die Satelliten im Weltraum verwenden, um die Position (z. B. dreidimensionale Koordinaten) von Funkempfängern oder deren Antennen auf oder über der Erde zu lokalisieren. Typischerweise stehen sowohl Pseudoentfernungs- als auch integrierte Trägerphasen-Funk-Messungen innerhalb eines zivilen Funkempfängers für jedes Trägersignal jedes Funk-Satelliten, der verfolgt wird, zur Verfügung. Die Pseudoentfernungsmessung erfasst die scheinbare Zeitdauer, die der betreffende Code benötigt, um vom Satelliten zum Empfänger zu gelangen. Die Zeitdauer ist gleich der Zeit, zu der das Signal gemäß der Empfängeruhr am Empfänger ankommt, abzüglich der Zeit, zu der das Signal gemäß der Satellitenuhr den Satelliten verlassen hat.

Gemäß der Erfindung werden über die Verwendung von zwei Funkempfängern mit einem definierten Abstand zwei Sätze GPS-Koordinaten erfasst und zueinander plausibilisiert. Die Genauigkeit der Funkpositionierung hängt dabei von mehreren Faktoren ab, wobei die größte Abweichung von der Troposphäre und Ionosphäre stammt. Sowohl Druck und Feuchte in der Troposphäre als auch der Ionisierungsgrad der Ionosphäre haben einen direkten Einfluss auf die Laufzeit der Signale zwischen Satelliten und dem Funkempfänger am Boden. Diese Abweichungen wirken sich auf beide Antennen bzw. auf beide Funkempfänger gleich aus, solange diese nur wenige Meter auseinander liegen. Durch den bekannten Abstand der beiden Antennen zueinander, können die erfassten Koordinaten damit plausibilisiert werden. Beispielsweise beträgt der Abstand höchstens 5 m oder weniger. Bevorzugte Abstände betragen ca. 1 m. Der Abstand sollte dabei vorzugsweise größer als ca. 30 cm sein. Jedoch können bei sehr kleinen Fahrzeugen auch kleinere Abstände vorgesehen sein.

Sobald die ermittelten Positionen der beiden Funkantennen bzw. Funkempfänger zueinander um ein vorbestimmtes Maß voneinander abweichen, wird das Fahrzeug bzw. die Maschine über die Steuer- und Auswerteeinheit bzw. die Maschinensteuerung in einen definierten sicheren Zustand versetzt.

Der erste Funkempfänger und der zweite Funkempfänger geben beide die erfassten und zunächst unkorrigierten Koordinaten an einen sicheren Vergleicher weiter, der durch die Rechnereinheiten der Steuer- und Auswerteeinheit gebildet wird. Der Vergleicher prüft, ob der Abstand δ zwischen den Koordinaten mit dem tatsächlichen Montageabstand der beiden Funkempfänger bis auf eine vorgesehene Toleranz übereinstimmt. Damit wird der erfasste Positionswert plausibilisiert und kann als Basis für eine genaue Positionserfassung verwendet werden.

Die Erfindung ermöglicht eine genaue und sichere Positionierung von dem mobilen Fahrzeug bzw. der mobilen Maschine in einem Außenbereich, beispielsweise einem Agrargebiet oder einer Baustelle. Es ist somit möglich, das autonome Fahrzeug in einem Bereich einzugrenzen mit der Sicherstellung, dass das autonome Fahrzeug die Einsatzzone nicht verlässt. Beispielsweise kann sichergestellt werden, dass ein autonomer Traktor im Feld arbeitet und nicht auf eine Bundesstraße oder Autobahn fährt. Durch die genaue Lokalisierung der beiden Antennen der Funkempfänger kann auch die Fahrtrichtung des Fahrzeugs sicher bestimmt werden, sowie seine Neigung, da die Positionserfassung jedes Funkempfängers im Raum stattfindet und nicht nur in einer flachen Ebene. Aus der Position der beiden Funkempfänger zueinander im Raum kann die Richtung des Fahrzeugs bestimmt werden.

Gemäß einer Weiterbildung der Erfindung weist das Navigationssystem einen ersten Echtzeitkinematik-Empfänger auf, wobei der erste Echtzeitkinematik-Empfänger an die Steuer- und Auswerteeinheit angeschlossen ist, wobei die Steuer- und Auswerteeinheit ausgebildet ist, die Positionsdaten des ersten Echtzeitkinematik-Empfängers auszuwerten und die Positionsdaten des ersten Funkempfängers und/oder die Positionsdaten des zweiten Funkempfängers zu korrigieren.

Die Positionsdaten des ersten Echtzeitkinematik-Empfängers werden ausgewertet und mit den Positionsdaten des ersten Funkempfängers und/oder den Positionsdaten des zweiten Funkempfängers kombiniert, um die Positionsdaten des ersten Funkempfängers und/oder die Positionsdaten des zweiten Funkempfängers zu korrigieren.

Der Echtzeitkinematik-Empfänger enthält eine Echtzeit-Kinematikkomponente, die konfiguriert ist, um die Genauigkeit von Positionsdaten zu verbessern, die von dem Funksignal von dem Funkempfänger abgeleitet werden. Eine Echtzeitkinematik-Komponente verwendet zusätzlich zum Informationsgehalt des Signals, Messungen der Phase der Trägerwelle des Signals, um Echtzeitkorrekturen bereitzustellen, die bis zu einer Genauigkeit von Zentimetern der Positionsbestimmung führen können.

Um systematische Fehler zu beseitigen oder zu reduzieren, werden beispielsweise differentielle Operationen in Funkanwendungen eingesetzt. Differentielle Funkoperationen beinhalten einen oder mehrere Referenzempfänger, die sich an bekannten Standorten, auch Basisstationen genannt, befinden, zusammen mit einer Kommunikationsverbindung zwischen dem mobilen Echtzeitkinematik-Empfänger des Fahrzeugs und dem Referenzempfänger. Die Referenzempfänger generieren Korrekturdaten, die einigen oder allen der oben genannten Fehler zugeordnet sind, und die Korrekturdaten werden über die Kommunikationsverbindung an den Echtzeitkinematik-Empfänger gesendet. Der mobile Echtzeitkinematik-Empfänger wendet dann die Korrekturdaten auf seine eigenen Trägerphasenmessungen oder Positionsschätzungen an und erhält dadurch eine genauere berechnete Position. Beispielsweise sind lokale ortsfeste Echtzeitkinematik-Basisstationen vorgesehen, die jeweils ein drahtloses Kommunikationsgerät und einen Referenzempfänger aufweisen.

Bei einer Schwankung der GPS-Koordinaten derart, dass der Abstand zwischen den Antennen der Funkempfänger im Rauschen untergehen könnte, werden die Koordinaten von jedem Funkempfänger anhand von Echtzeitkinematik Daten des Echtzeitkinematik-Empfängers vor der Plausibilisierung korrigiert. Zur Vermeidung eines Versagens aufgrund einer gemeinsamen Ursache (Common Cause Failure), werden die Korrekturwerte von zwei unterschiedlichen Echtzeitkinematik-Bodenstationen verwendet. Dabei sollen bevorzugt die Korrekturinformationen aus einem Umkreis von maximal 30 km stammen, in dem in Europa in der Regel mehrere Echtzeitkinematik-Basis/Korrekturstationen zu finden sind. Ggf. kann auch am dem Einsatzort eine mobile Korrekturstation errichtet werden.

Gemäß einer Weiterbildung der Erfindung weist das Navigationssystem einen zweiten Echtzeitkinematik-Empfänger auf, wobei der zweite Echtzeitkinematik-Empfänger an die Steuer- und Auswerteeinheit angeschlossen ist, wobei die Steuer- und Auswerteeinheit ausgebildet ist, die Positionsdaten des zweiten Echtzeitkinematik-Empfängers auszuwerten und die Positionsdaten des ersten Funkempfängers und/oder die Positionsdaten des zweiten Funkempfängers zu korrigieren.

Die Positionsdaten des zweiten Echtzeitkinematik-Empfängers werden ausgewertet und mit den Positionsdaten des ersten Funkempfängers und/oder den Positionsdaten des zweiten Funkempfängers kombiniert, um die Positionsdaten des ersten Funkempfängers und/oder die Positionsdaten des zweiten Funkempfängers zu korrigieren.

Sollte eine sicherheitsrelevanten Positionierungsgenauigkeit von beispielsweise 2,5 m nicht ausreichen, werden die Koordinatensätze der Funkempfänger mittels der beiden Echtzeitkinematik-Empfänger korrigiert. Hierzu ist auch eine zweite Echtzeitkinematik Bodenstation vorgesehen. Die sicherheitsrelevante Genauigkeit hängt direkt ab von der erreichbaren Genauigkeit des zweiten Korrekturmittels, also des zweiten Echtzeitkinematik-Empfängers.

Gemäß einer Weiterbildung der Erfindung weist das Navigationssystem mindestens einen Drei-Achsen-Neigungssensoren auf.

Dadurch, dass die Funkempfänger mit einem definierten Abstand angebracht sind, beispielsweise auf jeder Seite einer Kabine eines autonomen Fahrzeugs bzw. einer autonomen Maschine, kann somit auch eine eventuelle Schräglage des autonomen Fahrzeugs erfasst werden. Anhand der Neigungsinformation des Drei-Achsen-Neigungssensors, kann die Position noch genauer plausibilisiert werden. Insbesondere kann die Orientierung des autonomen Fahrzeugs im Raum präziser bestimmt werden.

Gemäß einer Weiterbildung der Erfindung weist das Navigationssystem mindestens einen Odometriesensor auf.

Die Positionierungsdaten werden gemäß der Weiterbildung über Odometriedaten des Odometriesensors und damit die physikalische Eigenschaften, beispielsweise der Geschwindigkeit, der Beschleunigung oder der Fahrkinematik des Fahrzeugs zusätzlich plausibilisiert. Dadurch könnte beispielsweise ein Koordinatensprung erkannt und für eine weitere Plausibilisierung herangezogen werden, da das autonome Fahrzeug innerhalb eines bestimmten Zeitraums nur bestimmte Veränderungen zulässt.

Gemäß einer Weiterbildung der Erfindung weist das System mindestens ein erstes autonomes Fahrzeug und mindestens ein zweites autonomen Fahrzeug auf, wobei das System eine Koordinierungssteuerung aufweist, wobei die Koordinierungssteuerung ausgebildet ist, die geprüften Positionsdaten des ersten autonomen Fahrzeugs zu empfangen und die geprüften Positionsdaten des zweiten autonomen Fahrzeugs zu empfangen und ausgebildet ist, eine vordefinierte Formation der autonomen Fahrzeuge zu berechnen und berechnete Trajektoriedaten an das erste autonome Fahrzeug und an das zweite autonome Fahrzeug zu senden.

Ein Vorteil ist die Verwendung der Position des ersten autonomen Fahrzeugs zur Position eines mindestens zweiten autonomen Fahrzeugs. Damit kann in der Koordinierungssteuerung bzw. einer übergeordneten Steuerung eine mögliche Kollision zwischen dem ersten und dem zweiten Fahrzeug erkannt werden und durch entsprechende Maßnahmen, beispielsweise ein Signal an die Maschine mit Kollisionskurs, eine Änderung der Geschwindigkeit und/oder eine Änderung des Lenkwinkels, verhindert werden. Diese Anwendung hat einen Vorteil bei Maschinenschwärmen oder bei Arbeitsprozessen, bei denen mehrere Maschinen beteiligt sind, wie z.B. auf einer Großbaustelle oder im Agrarumfeld bei einem Ernteprozess.

Die Erfindung wird nachstehend auch hinsichtlich weiterer Vorteile und Merkmale unter Bezugnahme auf die beigefügte Zeichnung anhand von Ausführungsbeispielen erläutert. Die Figuren der Zeichnung zeigen in:
- Figur 1: ein System mit mindestens einem autonomen Fahrzeug;

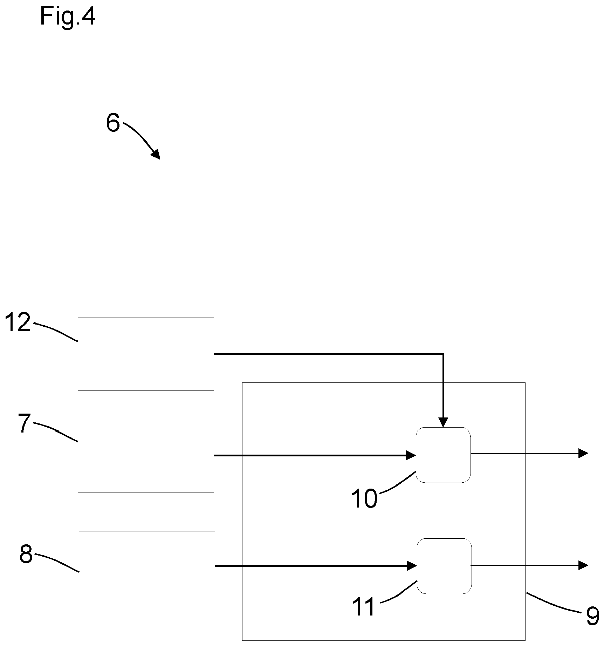

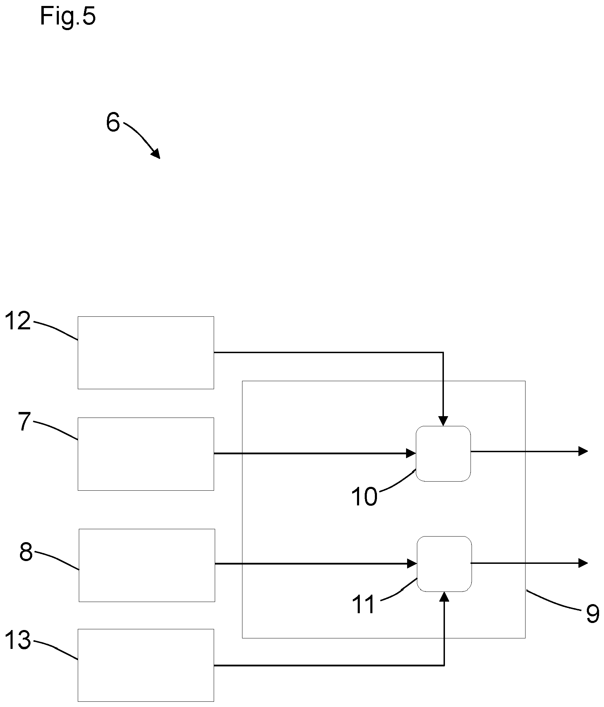

- Figur 2 bis Figur 7: jeweils ein Navigationssystem;
- Figur 8: ein System 1 mit mindestens einem ersten autonomen Fahrzeug 2 und mindestens einem zweiten autonomen Fahrzeug 16.

In den nachfolgenden Figuren sind identische Teile mit identischen Bezugszeichen versehen.

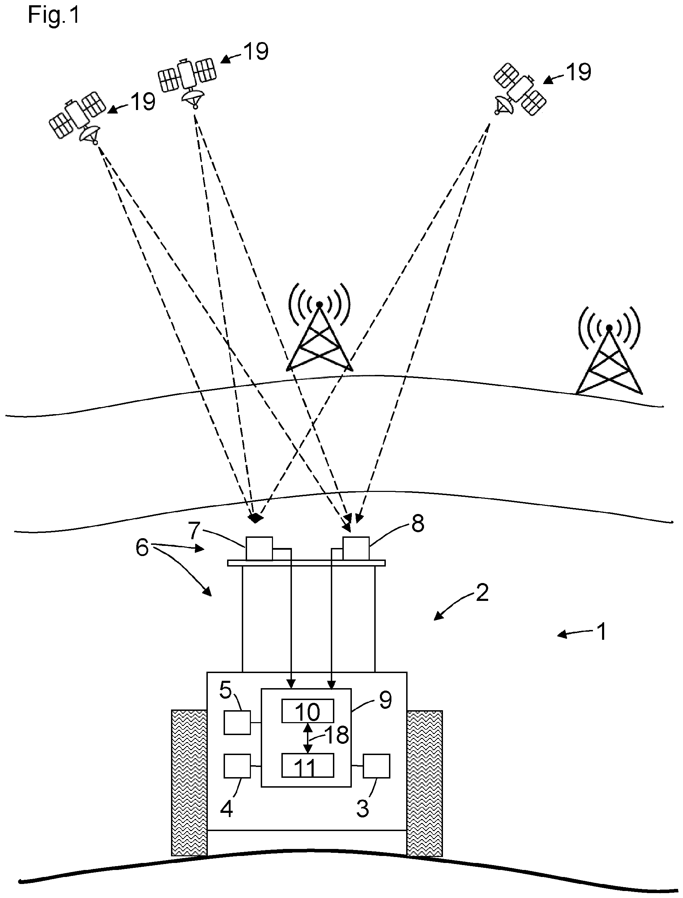

Figur 1 zeigt ein System 1 mit mindestens einem autonomen Fahrzeug 2, wobei das autonome Fahrzeug 2 mindestens einen Antrieb 3, mindestens eine Bremse 4 und mindestens eine Lenkung 5 aufweist, wobei das Fahrzeug 2 ein Navigationssystem 6 aufweist, wobei das Navigationssystem 6 einen ersten Funkempfänger 7 und einen zweiten Funkempfänger 8 aufweist, wobei der erste Funkempfänger 7 und der zweite Funkempfänger 8 in einem vordefinierten Abstand am Fahrzeug 2 angeordnet sind, wobei das Navigationssystem 6 eine Steuer- und Auswerteeinheit 9 aufweist, an welche der erste Funkempfänger 7 und der zweite Funkempfänger 8 angeschlossen sind, wobei die Steuer- und Auswerteeinheit 9 zwei unabhängige Rechnereinheiten 10, 11 aufweist, wobei die Steuer- und Auswerteeinheit 9 ausgebildet ist, die Positionsdaten des ersten Funkempfängers 7 und die Positionsdaten des zweiten Funkempfängers 8 mit beiden Rechnereinheiten 10, 11 auszuwerten und miteinander zu vergleichen und die Steuer- und Auswerteeinheit 9 ausgebildet ist, bei einer gültigen Übereinstimmung der Positionsdaten geprüfte Positionsdaten zu erzeugen.

Gemäß dem System 1 in Figur 1 kann über eine funktional sichere Lokalisierung die Position des autonomen Fahrzeugs 2 überwacht und über die die Steuer- und Auswerteeinheit 9 bzw. eine Maschinensteuerung die Aktorik des autonomen Fahrzeugs 2 also der Antrieb 3, die Bremse 4 und/oder die Lenkung 5 so beeinflusst bzw. gesteuert werden, dass ein Verlassen des definierten Arbeitsbereichs verhindert wird.

Es werden zwei Rechnereinheiten 10, 11 bzw. Verarbeitungseinheiten eingesetzt, die Daten, beispielsweise Ergebnisse, Zwischenergebnisse und/oder Testdaten gegenseitig austauschen. Durch die zwei Rechnereinheiten 10, 11 wird ein redundantes System gebildet. In jeder Rechnereinheit 10, 11 wird per Software ein Vergleich der Daten durchgeführt. Eine festgestellte Ungleichheit führt zu einer Fehlermeldung, die beispielsweise zur Abschaltung oder einer Geschwindigkeitsreduzierung des Antriebs 3, zur Einleitung eines Lenkvorganges und/oder zur Einleitung eines Bremsvorgangs genutzt werden kann.

Die zwei Rechnereinheiten 10, 11 können identisch ausgebildet sein. Jedoch können die Rechnereinheiten 10, 11 auch jeweils verschieden ausgebildet sein. Dadurch wird ein diversitäres, redundantes System 1 gebildet. Systematische Fehler, die ggf. in einer Rechnereinheit 10 oder 11 vorhanden sind, werden dann mit sehr hoher Wahrscheinlichkeit durch die parallele zweite Rechnereinheit 11 oder 10 aufgedeckt.

Die Rechnereinheiten 10 und 11 sind mittels mindestens einer Kommunikationsschnittstelle 18 miteinander verbunden. Dadurch können die Ergebnisse der ersten Rechnereinheit 10 an die zweite Rechnereinheit 11 übermittelt werden und umgekehrt von der zweiten Rechnereinheit 11 an die erste Rechnereinheit 10 übermittelt werden. Eine Rechnereinheit 10, 11 überprüft jeweils die Ergebnisse der anderen Rechnereinheit 11, 10.

Die Rechnereinheiten 10, 11 können beispielsweise durch Mikrocontroller, Mikroprozessoren, digitale Signalprozessoren und Ähnliches gebildet sein.

Das System 1 bildet damit ein Sicherheitssystem, welches mindestens zweikanalig aufgebaut ist.

Die Rechnereinheiten 10, 11 werden zyklisch regelmäßig getestet, so kann ein Versagen oder einen Defekt erkannt werden. Beispielsweise führen die Rechnereinheiten 10, 11 jeweils Selbsttests durch, um Fehler aufzudecken. Weiter kann auch vorgesehen sein, dass sich die Rechnereinheiten 10, 11 gegenseitig testen, wodurch Fehler noch wirksamer vermieden werden, wodurch ein hoher Diagnosedeckungsgrad erreicht wird.

Funkempfänger 7, 8 sind Satellitennavigationssystemempfänger, die konfiguriert sind, um Signale von einem Satz von Satellitensendern 19 zu empfangen. Ein Funkempfänger 7, 8 ist ein Empfänger für ein globales Navigationssatellitensystem (GNSS-System), der Signale von einem oder mehreren Funk-Satellitensendern 19 empfängt.

Die Satellitensender 19 sind Teil eines Satellitennavigationssystems und generieren entsprechende Satellitennavigationssignale, die von der Satellitennavigationssignalerfassungslogik erfasst werden.

Gemäß Figur 1 wird über die Verwendung von zwei Funkempfängern 7, 8 mit einem definierten Abstand zwei Sätze GPS-Koordinaten erfasst und zueinander plausibilisiert. Beispielsweise beträgt der Abstand höchstens 5 m oder weniger. Bevorzugte Abstände betragen 1 m.

Sobald die ermittelten Positionen der beiden Funkantennen bzw. Funkempfänger 7, 8 zueinander um ein vorbestimmtes Maß voneinander abweichen, wird das Fahrzeug 2 bzw. die Maschine über die Steuer- und Auswerteeinheit 9 bzw. die Maschinensteuerung in einen definierten sicheren Zustand versetzt.

Der erste Funkempfänger 7 und der zweite Funkempfänger 8 geben beide die erfassten und zunächst unkorrigierte Koordinaten an einen sicheren Vergleicher weiter, der durch die Rechnereinheiten der Steuer- und Auswerteeinheit 9 gebildet wird. Der Vergleicher prüft, ob der Abstand δ zwischen den Koordinaten mit dem tatsächlichen Montageabstand der beiden Funkempfänger 7, 8 bis auf eine vorgesehene Toleranz übereinstimmt. Damit wird der erfasste Positionswert plausibilisiert und kann als Basis für einen genaue Positionserfassung verwendet werden.

Das System 1 ermöglicht eine genaue und sichere Positionierung von dem mobilen Fahrzeug 2 bzw. der mobilen Maschine in einem Außenbereich, beispielsweise einem Agrargebiet oder einer Baustelle. Es ist somit möglich, das autonome Fahrzeug 2 in einem Bereich einzugrenzen mit der Sicherstellung, dass das autonome Fahrzeug 2 die Einsatzzone nicht verlässt. Beispielsweise kann sichergestellt werden, dass ein autonomer Traktor im Feld arbeitet und nicht auf eine Bundesstraße oder Autobahn fährt. Durch die genaue Lokalisierung der beiden Antennen der Funkempfänger 7, 8 kann auch die Fahrtrichtung des Fahrzeugs 2 sicher bestimmt werden, sowie seine Neigung, da die Positionserfassung jedes Funkempfängers 7, 8 im Raum stattfindet und nicht nur in einer Flächenebene. Aus der Position der beiden Funkempfänger 7, 8 zueinander im Raum kann die Richtung des Fahrzeugs 2 bestimmt werden.

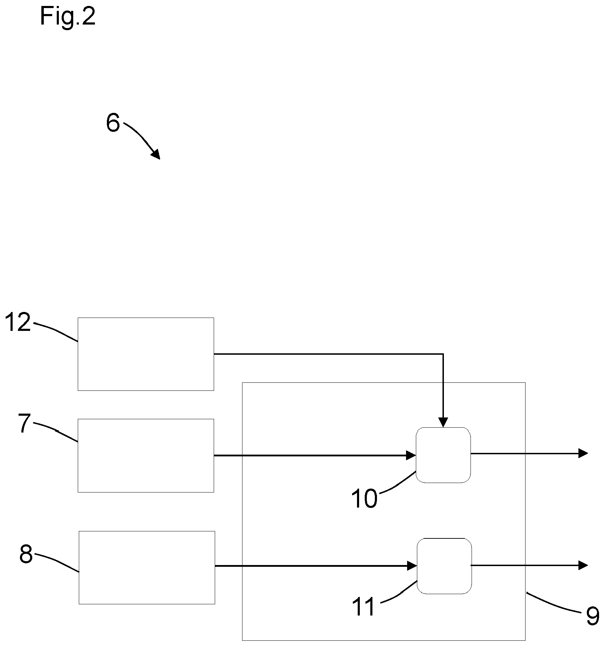

Beispielsweise weist das Navigationssystem 6 gemäß Figur 2 einen ersten Echtzeitkinematik-Empfänger 12 auf, wobei der erste Echtzeitkinematik-Empfänger 12 an die Steuer- und Auswerteeinheit 9 angeschlossen ist, wobei die Steuer- und Auswerteeinheit 9 ausgebildet ist, die Positionsdaten des ersten Echtzeitkinematik-Empfängers 12 auszuwerten und die Positionsdaten des ersten Funkempfängers 7 und/oder die Positionsdaten des zweiten Funkempfängers 8 zu korrigieren.

Der Echtzeitkinematik-Empfänger 12 enthält eine Echtzeit-Kinematik-Komponente, die konfiguriert ist, um die Genauigkeit von Positionsdaten zu verbessern, die von dem Funksignal von dem Funkempfänger 7 abgeleitet werden. Eine Echtzeitkinematik-Komponente verwendet zusätzlich zum Informationsgehalt des Signals, Messungen der Phase der Trägerwelle des Signals, um Echtzeitkorrekturen bereitzustellen, die bis zu einer Genauigkeit von Zentimetern der Positionsbestimmung führen können.

Bei einer Schwankung der GPS-Koordinaten derart, dass der Abstand zwischen den Antennen der Funkempfänger 7, 8 im Rauschen untergehen könnte, werden die Koordinaten von jedem Funkempfänger 7, 8 anhand von Echtzeitkinematik-Daten des Echtzeitkinematik-Empfängers 12 vor der Plausibilisierung korrigiert. Zur Vermeidung eines Versagens aufgrund einer gemeinsamen Ursache (Common Cause Failure), werden die Korrekturwerte von zwei unterschiedlichen Echtzeitkinematik-Bodenstationen verwendet.

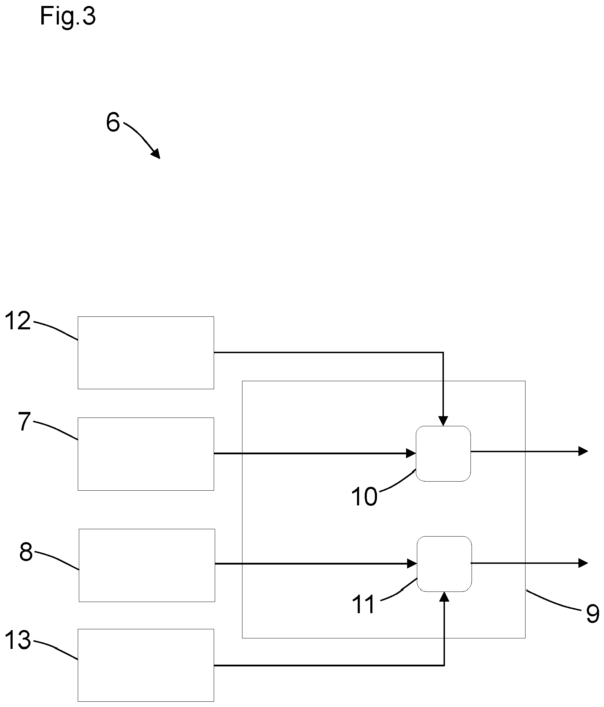

Beispielsweise weist das Navigationssystem 6 gemäß Figur 3 einen zweiten Echtzeitkinematik-Empfänger 13 auf, wobei der zweite Echtzeitkinematik-Empfänger 13 an die Steuer- und Auswerteeinheit 9 angeschlossen ist, wobei die Steuer- und Auswerteeinheit 9 ausgebildet ist, die Positionsdaten des zweiten Echtzeitkinematik-Empfängers 13 auszuwerten und die Positionsdaten des ersten Funkempfängers 7 und/oder die Positionsdaten des zweiten Funkempfängers 8 zu korrigieren.

Sollte eine sicherheitsrelevante Positionierungsgenauigkeit von beispielsweise 2,5 m nicht ausreichen, werden die Koordinatensätze der Funkempfänger 7, 8 mittels der beiden Echtzeitkinematik-Empfänger 12, 13 korrigiert. Hierzu ist auch eine zweite Echtzeitkinematik-Bodenstation vorgesehen. Die sicherheitsrelevante Genauigkeit hängt direkt ab von der erreichbaren Genauigkeit des zweiten Korrekturmittels also des zweiten Echtzeitkinematik-Empfängers 13.

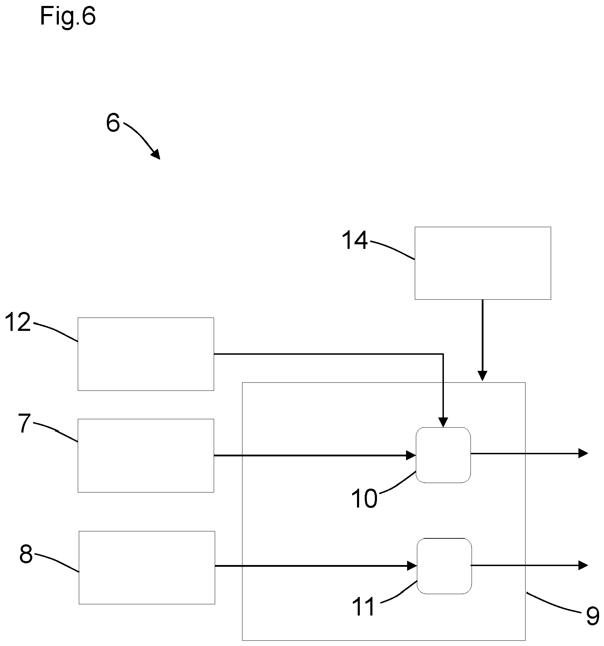

Beispielsweise weist das Navigationssystem 6 gemäß Figur 6 mindestens einen Drei-Achsen-Neigungssensor 14 auf.

Dadurch, dass die Funkempfänger 7 und 8 mit einem definierten Abstand angebracht sind, beispielsweise auf jeder Seite einer Kabine eines autonomen Fahrzeugs 2 bzw. einer autonomen Maschine, kann somit auch eine eventuelle Schräglage des autonomen Fahrzeugs 2 erfasst werden. Anhand der Neigungsinformation des Drei-Achsen-Neigungssensors 14, kann die Position noch genauer plausibilisiert werden. Insbesondere kann die Orientierung des autonomen Fahrzeugs 2 im Raum präziser bestimmt werden.

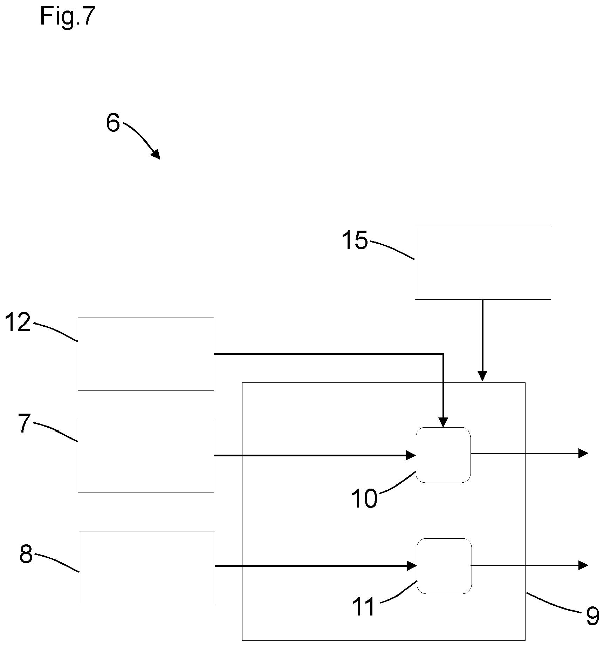

Beispielsweise weist das Navigationssystem 6 gemäß Figur 7 mindestens einen Odometriesensor 15 auf.

Die Positionierungsdaten werden gemäß der Weiterbildung über Odometriedaten des Odometriesensors 15 und damit die physikalischen Eigenschaften, beispielsweise der Geschwindigkeit, der Beschleunigung oder der Fahrkinematik des Fahrzeugs 2 zusätzlich plausibilisiert. Dadurch könnte beispielsweise ein Koordinatensprung erkannt und für eine weitere Plausibilisierung herangezogen werden, da das autonome Fahrzeug 2 innerhalb eines bestimmten Zeitraums nur bestimmte Veränderungen zulässt.

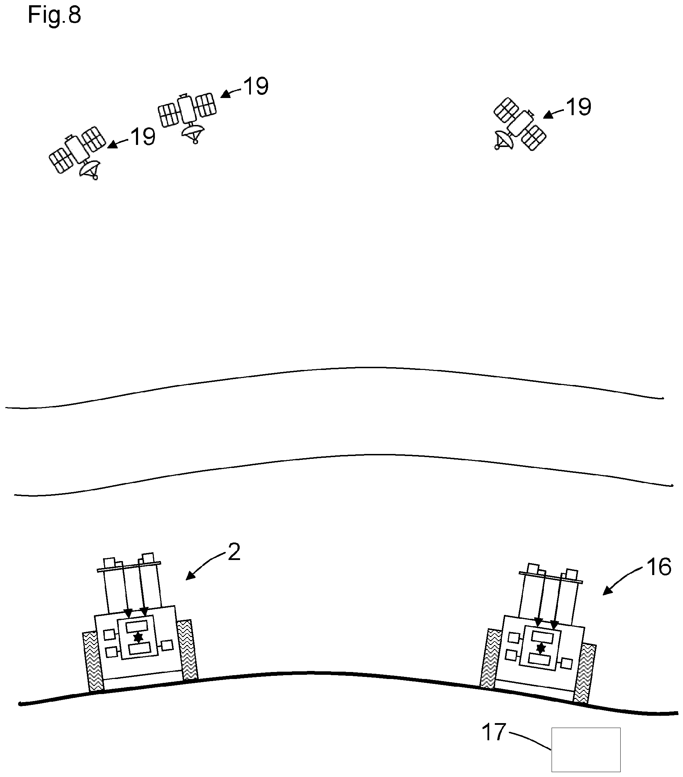

Gemäß Figur 8 weist das System 1 mindestens ein erstes autonomes Fahrzeug 2 und mindestens ein zweites autonomen Fahrzeug 16 auf, wobei das System 1 eine Koordinierungssteuerung 17 aufweist, wobei die Koordinierungssteuerung 17 ausgebildet ist,die geprüften Positionsdaten des ersten autonomen Fahrzeugs 2 zu empfangen und die geprüften Positionsdaten des zweiten autonomen Fahrzeugs 16 zu empfangen und ausgebildet ist, eine vordefinierte Formation der autonomen Fahrzeuge 2, 16 zu berechnen und berechnete Trajektoriedaten an das erste autonome Fahrzeug 2 und an das zweite autonome Fahrzeug 16 zu senden.

Ein Vorteil ist die Verwendung der Position des ersten autonomen Fahrzeugs 2 zur Position eines mindestens zweiten autonomen Fahrzeugs 16. Damit kann in der Koordinierungssteuerung 17 bzw. einer übergeordneten Steuerung eine mögliche Kollision zwischen dem ersten Fahrzeug 2 und dem zweiten Fahrzeug 16 erkannt werden und durch entsprechende Maßnahmen, beispielsweise ein Signal an die Maschine mit Kollisionskurs, eine Änderung der Geschwindigkeit und/oder eine Änderung des Lenkwinkels, verhindert werden. Diese Anwendung hat einen Vorteil bei Maschinenschwärmen oder bei Arbeitsprozessen, bei denen mehrere Maschinen beteiligt sind wie z.B. auf einer Großbaustelle oder im Agrarumfeld bei einem Ernteprozess.

Bezugszeichen:
1 System
2, 16 autonomes Fahrzeug
3 Antrieb
4 Bremse
5 Lenkung
6 Navigationssystem
7 erster Funkempfänger
8 zweiter Funkempfänger
9 Steuer- und Auswerteeinheit
10, 11 Rechnereinheiten
12 erster Echtzeitkinematik-Empfänger
13 zweiter Echtzeitkinematik-Empfänger
14 Neigungssensoren
15 Odometriesensor
17 Koordinierungssteuerung
18 Kommunikationsschnittstelle
19 Satellitensender

## Patentansprüche

1. System (1) mit mindestens einem autonomen Fahrzeug (2, 16), wobei das autonome Fahrzeug (2, 16)
mindestens einen Antrieb (3), mindestens eine Bremse (4) und mindestens eine Lenkung (5) aufweist,
wobei das Fahrzeug (2, 16) ein Navigationssystem (6) aufweist,
wobei das Navigationssystem (6) einen ersten Funkempfänger (7) für ein globales Navigationssatellitensystem und einen zweiten Funkempfänger (8) für ein globales Navigationssatellitensystem aufweist,
wobei der erste Funkempfänger (7) und der zweite Funkempfänger (8) in einem vordefinierten Abstand am Fahrzeug (2, 16) angeordnet sind,
wobei das Navigationssystem (6) eine Steuer- und Auswerteeinheit (9) aufweist, an welche der erste Funkempfänger (7) und der zweite Funkempfänger (8) angeschlossen sind,
**dadurch gekennzeichnet, dass** die Steuer- und Auswerteeinheit (9) zwei unabhängige Rechnereinheiten (10, 11) aufweist, wobei die Steuer- und Auswerteeinheit (9) ausgebildet ist, die Positionsdaten des ersten Funkempfängers (7) und die Positionsdaten des zweiten Funkempfängers (8) mit beiden Rechnereinheiten (10, 11) auszuwerten und miteinander zu vergleichen und die Steuer- und Auswerteeinheit (9) ausgebildet ist, bei einer gültigen Übereinstimmung der Positionsdaten geprüfte Positionsdaten zu erzeugen.

2. System (1) nach Anspruch 1, **dadurch gekennzeichnet, dass** das Navigationssystem (6) einen ersten Echtzeitkinematik-Empfänger (12) aufweist, wobei der erste Echtzeitkinematik-Empfänger (12) an die Steuer- und Auswerteeinheit (9) angeschlossen ist, wobei die Steuer- und Auswerteeinheit (9) ausgebildet ist, die Positionsdaten des ersten Echtzeitkinematik-Empfängers (12) auszuwerten und die Positionsdaten des ersten Funkempfängers (7) und/oder die Positionsdaten des zweiten Funkempfängers (8) zu korrigieren.

3. System (1) nach Anspruch 1, **dadurch gekennzeichnet, dass** das Navigationssystem (6) einen zweiten Echtzeitkinematik-Empfänger (13) aufweist, wobei der zweite Echtzeitkinematik-Empfänger (13) an die Steuer- und Auswerteeinheit (9) angeschlossen ist, wobei die Steuer- und Auswerteeinheit (9) ausgebildet ist, die Positionsdaten des zweiten Echtzeitkinematik-Empfängers (13) auszuwerten und die Positionsdaten des ersten Funkempfängers (7) und/oder die Positionsdaten des zweiten Funkempfänger (8) zu korrigieren.

4. System (1) nach einem der vorhergehenden Ansprüche, **dadurch gekennzeichnet, dass** das Navigationssystem (6) mindestens einen Drei-Achsen-Neigungssensor (14) aufweist.

5. System (1) nach einem der vorhergehenden Ansprüche, **dadurch gekennzeichnet, dass** das Navigationssystem (6) mindestens einen Odometriesensor (15) aufweist.

6. System (1) nach Anspruch 1 mit mindestens einem ersten autonomen Fahrzeug (2) und mindestens einem zweiten autonomen Fahrzeug (16), wobei das System (1) eine Koordinierungssteuerung (17) aufweist, wobei die Koordinierungssteuerung (17) ausgebildet ist, die geprüften Positionsdaten des ersten autonomen Fahrzeugs (2) zu empfangen und die geprüften Positionsdaten des zweiten autonomen Fahrzeugs (16) zu empfangen und ausgebildet ist, eine vordefinierte Formation der autonomen Fahrzeuge (2, 16) zu berechnen und berechnete Trajektoriedaten an das erste autonome Fahrzeug (2) und an das zweite autonome Fahrzeug (16) zu senden.

7. Verfahren mit einem System (1) mit mindestens einem autonomen Fahrzeug (2, 16), wobei das autonome Fahrzeug (2, 16)
mindestens einen Antrieb (3), mindestens eine Bremse (4) und mindestens eine Lenkung (5) aufweist,
wobei das Fahrzeug (2, 16) ein Navigationssystem (6) aufweist,
wobei das Navigationssystem (6) einen ersten Funkempfänger (7) und einen zweiten Funkempfänger (8) aufweist,
wobei der erste Funkempfänger (7) und der zweite Funkempfänger (8) in einem vordefinierten Abstand am Fahrzeug (2, 16) angeordnet werden,
wobei das Navigationssystem (6) eine Steuer- und Auswerteeinheit (9) aufweist, an welche der erste Funkempfänger (7) und der zweite Funkempfänger (8) angeschlossen werden,
wobei die Steuer- und Auswerteeinheit (9) zwei unabhängige Rechnereinheiten (10, 11) aufweist, wobei die Steuer- und Auswerteeinheit (9) die Positionsdaten des ersten Funkempfängers (7) und die Positionsdaten des zweiten Funkempfängers (8) mit beiden Rechnereinheiten (10, 11) auswertet und miteinander vergleicht und die Steuer- und Auswerteeinheit (9) bei einer gültigen Übereinstimmung der Positionsdaten geprüfte Positionsdaten erzeugt.

8. Verfahren nach Anspruch 7 mit mindestens einem ersten autonomen Fahrzeug (2) und mindestens einem zweiten autonomen Fahrzeug (16), wobei das System (1) eine Koordinierungssteuerung (17) aufweist, wobei die Koordinierungssteuerung (17) die geprüften Positionsdaten des ersten autonomen Fahrzeugs (2) empfängt und die geprüften Positionsdaten des zweiten autonomen Fahrzeugs (16) empfängt und eine vordefinierte Formation der autonomen Fahrzeuge (2, 16) berechnet und berechnete Trajektoriedaten an das erste autonome Fahrzeug (2) und an das zweite autonome Fahrzeug (16) sendet.
